# EUROPÄISCHE PATENTSCHRIFT

(11) **EP 1 522 483 B1**
(45) Veröffentlichungstag und Bekanntmachung des Hinweises auf die Patenterteilung: **08.11.2006**
(21) Anmeldenummer: 04022476.8
(22) Anmeldetag: 22.09.2004
(51) Int. Cl.: B62D 1/06

(54) **Beheizbare Lenkvorrichtung, Halbfertigteil hierfür und Verfahren zur Herstellung eines Halbfertigteils**
Heatable steering device, a semi-finished part therefore and method of manufacturing a semi-finished part
Dispositif de direction chauffable, produit semi-fini et procédé de fabrication d'un produit semi-fini

(30) Priorität: 09.10.2003 DE 10346942
(43) Veröffentlichungstag der Anmeldung: 13.04.2005
(73) Patentinhaber: Formtec Technische Formholzteile GmbH, 73655 Plüderhausen (DE)
(72) Erfinder: Königbauer, Georg, 73655 Plüderhausen (DE); Wöhrle, Hans, 73655 Plüderhausen (DE)
(74) Vertreter: HOFFMANN EITLE

(56) Entgegenhaltungen:
- DE-A1- 3 339 500
- DE-C1- 19 910 132
- DE-U1- 29 902 044
- US-A- 5 072 093
- US-A- 5 840 144
- US-A- 6 038 770
- PATENT ABSTRACTS OF JAPAN Bd. 2000, Nr. 07, 29. September 2000 (2000-09-29) -& JP 2000 118413 A (CAVALLI SRL), 25. April 2000 (2000-04-25)

## Beschreibung

### Technisches Gebiet

Die vorliegende Erfindung betrifft eine beheizbare Lenkvorrichtung, insbesondere für Kraftfahrzeuge, die in ihrem Inneren eine Heizeinrichtung aufweist und auf ihrer Außenseite mit einer Furnierschicht versehen ist. Ferner betrifft die Erfindung ein Halbfertigteil hierfür sowie eine Verfahren zu Herstellung eines Halbfertigteils.

### Stand der Technik

Ein Lenkrad nach dem Oberbegriff aus Anspruch 1 ist bereits durch DE 299 02 044 U1 bekannt.

Insbesondere bei Lenkrädern, die außen mit einer Furnierschicht bzw. Edelfurnierschicht versehen sind, besteht zunehmend das Bedürfnis, die Lenkräder beheizbar auszuführen, um das kalte Griffgefühl sogenannter Holzlenkräder bei niedrigen Temperaturen zu vermeiden.

Im Stand der Technik sind verschiedene Verfahren zum Herstellen von beheizten Holzlenkrädern bekannt. So ist es beispielsweise üblich, Heizdrähte oder dergleichen auf einen Lenkradkranz aufzubringen und diesen anschließend mit einem herkömmlichen Schaummaterial zu umhüllen oder ein Trägermaterial auf den Kranz aufzukleben, das anschließend mit Leder, Furnier oder dergleichen umhüllt wird. Bei dieser Vorgehensweise muss jedoch ein relativ dickes Schaum- oder Trägermaterial durchwärmt werden, was eine lange Erwärmungszeit und einen hohen Energieverbrauch mit sich bringt. Dieses Problem wird noch dadurch verstärkt, dass sich im Bereich des auf den Lenkradkranz aufgewickelten Heizdrahtes oft wärmeisolierende Luftschichten bilden.

Um dieses Problem zu lösen, offenbart beispielsweise die DE 33 39 500 C2 ein beheizbares Lenkrad, bei dem zunächst eine wärmeisolierende Schicht auf einen Lenkradkranz aufgeschäumt wird, um anschließend ein wärmeerzeugendes Flachmaterial sowie eine Deckschicht aus Leder oder dergleichen aufzubringen und zu verkleben. Ein derartiger Aufbau führt zwar zu einem zügigen Erwärmungsverhalten, ergibt jedoch eine ungleichmäßige Temperaturverteilung und hat sich für Lenkräder mit einer Furnier- bzw. Edelfurnierhülle als wenig geeignet erwiesen.

### Darstellung der Erfindung

Es ist Aufgabe der vorliegenden Erfindung, eine beheizbare Lenkvorrichtung bereitzustellen, die einfach herzustellen ist und eine gleichmäßige Temperaturverteilung ermöglicht. Ferner ist es Aufgabe der vorliegenden Erfindung, ein vereinfachtes Verfahren zur Herstellung einer derartigen Lenkvorrichtung bereitzustellen.

Diese Aufgabe wird erfindungsgemäß durch eine beheizbare Lenkvorrichtung nach Anspruch 1, ein Halbfertigteil für eine beheizbare Lenkvorrichtung nach Anspruch 2 sowie ein Verfahren zur Herstellung nach Anspruch 11 gelöst. Vorteilhafte Weiterbildungen der Erfindung sind in den abhängigen Ansprüchen angegeben.

Der vorliegenden Erfindung liegt der Gedanke zugrunde, die Materialien der Lenkvorrichtung derart festzulegen, dass ein optimaler Kompromiss zwischen einer schnellen Durchwärmung einerseits und einer gleichmäßigen Durchwärmung andererseits erzielt wird. Dabei haben die Erfinder festgestellt, dass ein derart ausgeglichenes Verhalten erzielt werden kann, wenn die Lenkvorrichtung zwei auf Holz bzw. einem Holzwerkstoff basierende Schichten aufweist; zwischen denen eine Heizeinrichtung eingebracht ist.

Nach Erkenntnis der Erfinder ermöglicht diese Sandwichbauweise mit über und unter der Heizeinrichtung vorgesehenen Holzwerkstoffen eine ausreichend zügige Erwärmung und eine gleichmäßige Temperaturverteilung, was den Gebrauch der Lenkvorrichtung für den Fahrer sehr angenehm macht. Ferner ergibt sich ein mäßiger Energieverbrauch, was bei der zunehmenden Anzahl elektrischer Bauteile und den begrenzten Stromressourcen in Kraftfahrzeugen von Bedeutung ist.

Gleichzeitig ist die erfindungsgemäße Lenkvorrichtung einfach und kostengünstig herzustellen, da einerseits die Bauteile aus Holzwerkstoffen selbst einfach in beliebigen Formen herstellbar sind und andererseits - im Unterschied zu Kunststoffen, Leder oder dergleichen - nur geringe Anforderungen an die einzusetzenden Klebstoffe stellen.

Eine besonders einfache und variable Herstellung wird erfindungsgemäß durch ein Halbfertigteil nach Anspruch 2 ermöglicht. Hierdurch kann die Holz-Holz-Sandwichkonstruktion mit der Heizeinrichtung von dem Lenkkranz entkoppelt werden, und das Halbfertigteil kann für beliebige Fahrzeuge auch mit unterschiedlichen Lenkkränzen verarbeitet werden. Hierdurch kann das Herstellungsverfahren erheblich standardisiert und vereinfacht werden, wobei gleichzeitig ein hoher Grad der Vorfertigung möglich ist. Nicht zuletzt erlaubt die Vorfertigung eines Halbfertigteils auch eine Funktionsprüfung der eingelegten Heizeinrichtung, bevor die Lenkeinrichtung endgültig fertiggestellt wird, wodurch die Ausschussrate erheblich gesenkt werden kann.

Gemäß einer Weiterbildung der vorliegenden Erfindung ist die mindestens eine Furnierschicht mit dem Träger durch Formverpressen verbunden. Durch das Formverpressen wird ein enger Verbund der Heizeinrichtung mit der Klebstoffschicht sowie den angrenzenden Schichten erzielt, wodurch sich ein geringer Porenanteil in der Verbindungsschicht und dementsprechend eine hohe und gleichmäßige Wärmeleitfähigkeit ergibt.

Hinsichtlich einer schnellen Erwärmung der Oberfläche der Lenkvorrichtung ist es gemäß einer Weiterbildung der vorliegenden Erfindung bevorzugt, dass die Dicke der mindestens einen Furnierschicht höchstens 2,0 mm, bevorzugt höchstens 1,2 mm beträgt.

Wie bereits vorstehend erwähnt können bei der erfindungsgemäßen Sandwichbauweise vergleichsweise einfache und kostengünstige Klebstoffe zum Einsatz kommen, was bei den bisherigen Sandwichbauweisen mit geschäumten Kunststoffträgern nicht möglich war. So ist es gemäß einer Weiterbildung der vorliegenden Erfindung bevorzugt, dass die Klebstoffschicht einen duroplastischen Klebstoff aufweist, der insbesondere auf Harnstoff und/oder Melaminharz basiert. Alternativ oder zusätzlich hat es sich als vorteilhaft erwiesen, einen wärmeaktivierbaren Klebstoff einzusetzen, da hierdurch die Verarbeitung vereinfacht und eine Aktivierung des Klebstoffs beim Formverpressen unter Zufuhr von Wärme erzielt werden kann.

Im Hinblick auf die angestrebte, gleichmäßige Wärmeverteilung und ein zügiges Erwärmen der Lenkvorrichtung wird gemäß einer Weiterbildung der vorliegenden Erfindung vorgesehen, dass die Klebstoffschicht wärmeleitfähige Partikel aufweist, die bevorzugt aus einem metallischen Material, insbesondere aus Aluminium bestehen. Auf diese Weise kann selbst bei einer nicht flächig ausgebildeten Heizeinrichtung sichergestellt werden, dass sich die Lenkvorrichtung nicht nur lokal, sondern flächig erwärmt, wodurch ein entsprechen angenehmes Griffgefühl an der Lenkvorrichtung entsteht.

Als Heizeinrichtung haben sich insbesondere Gewebe oder Geflechte als vorteilhaft erwiesen, die zumindest teilweise elektrisch leitfähige Fasern, Drähte oder dergleichen aufweisen. Derartige Gewebe oder Geflechte lassen sich je nach Geometrie der Lenkvorrichtung in eine geeignete Form vorkonfektionieren und problemlos in die Sandwichbauweise einlegen. Gleichzeitig lässt sich durch die Anzahl und Verteilung der leitfähigen Fasern bzw. Drähte auch das Erwärmungsverhalten der Lenkvorrichtung gezielt steuern. Dabei ist es gemäß einer Weiterbildung der vorliegenden Erfindung bevorzugt, dass die Heizeinrichtung zumindest abschnittsweise durchlässig für Klebstoff ist, insbesondere senkrecht zu einer flächigen Erstreckungsrichtung der Heizeinrichtung. Hierdurch wird ein inniger Verbund zwischen der Klebstoffschicht und der Heizeinrichtung ermöglicht, indem die Klebstoffschicht beim Herstellen, insbesondere beim Formverpressen, in die Heizeinrichtung eindringen kann, sodass sich ein optimales Erwärmungsverhalten ergibt.

Ein erfindungsgemäßes Verfahren zum Herstellen eines derartigen Halbfertigteils umfasst die Merkmale von Anspruch 11. Das Verfahren zeichnet sich unter Anderem durch eine sehr geringe Anzahl von Arbeitsschritten aus, da gegenüber einem Halbfertigteil ohne Heizeinrichtung keine zusätzlichen Arbeitsschritte erforderlich sind, und ermöglicht durch das Formverpressen nicht nur eine genaue Formgebung, sondern auch einen geringen Porenanteil, und somit ein vorteilhaftes Erwärmungsverhalten des Halbfertigteils. Dabei können die Klebstoffschicht und die Heizeinrichtung einzeln oder gemeinsam auf eine erste Seitenfläche des Trägers oder auf eine erste Seitenfläche der mindestens einen Furnierschicht aufgelegt werden.

Hinsichtlich eines optimalen Aushärtungsvorganges der Klebstoffschicht ist es gemäß einer Weiterbildung der vorliegenden Erfindung bevorzugt, dass das Formverpressen unter Wärmezufuhr und/oder im hochfrequenten Wechselfeld erfolgt. Hierdurch können die verschiedenst artigen Klebstoffe zum Einsatz kommen, wobei insbesondere bei Einsatz eines hochfrequenten Wechselfeldes die Feuchtigkeitsverteilung der beteiligten.Holzwerkstoffe nicht beeinträchtigt wird, wodurch die Formstabilität der Lenkvorrichtung deutlich verbessert wird.

Ferner ist gemäß einer Weiterbildung der vorliegenden Erfindung vorgesehen, dass die mindestens eine Furnierschicht beim Formverpressen in eine neue, dauerhafte Form gebracht wird. Dementsprechend ist es nicht erforderlich, die Furnierschicht bereits von vornherein in eine bestimmte Form zu bringen, sondern die Furnierschicht kann in einer beliebigen Form vorkonfektioniert werden und dann gegebenenfalls bei unterschiedlichen Bauteilen eingesetzt werden.

Um beim Formverpressen einen ausreichenden Verbund sowie einen geringen Porenanteil und somit ein gutes Erwärmungsverhalten zu erzielen, ist gemäß einer Weiterbildung der vorliegenden Erfindung vorgesehen, dass die mindestens eine Furnierschicht beim Formverpressen zumindest abschnittsweise mit einem Druck von mindestens 0,07 MPa beaufschlagt wird.

### Kurze Beschreibung der Zeichnungen

- Fig. 1: zeigt eine schematische Schnittansicht einer bevorzugten Ausführungsform der erfindungsgemäßen beheizbare Lenkvorrichtung;
- Fig. 2: zeigt eine schematische Schnittansicht einer bevorzugten Ausführungsform des erfindungsgemäßen Halbfertigteils für eine beheizbare Lenkvorrichtung;
- Fig. 3: zeigt eine schematische, explosionsartige Schnittansicht der in Fig. 2 gezeigten Ausführungsform;
- Fig. 4: zeigt eine schematische Draufsicht einer Heizeinrichtung.

### Ausführliche Beschreibung bevorzugter Ausführungsformen

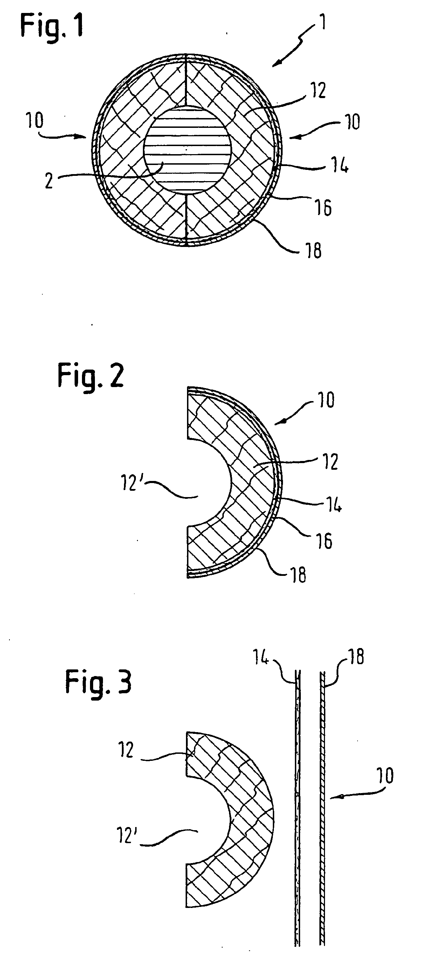

Fig. 2 zeigt eine schematische Schnittansicht einer bevorzugten Ausführungsform eines erfindungsgemäßen Halbfertigteils 10 für eine beheizbare Lenkvorrichtung. Das Halbfertigteil 10 umfasst einen bogen - bzw. bogensegmentförmigen Träger 12, der in der vorliegenden Ausführungsform aus schichtverleimten und formgepressten Holzwerkstoffplatten besteht. Bei den Holzwerkstoffplatten kann es sich neben Holz beispielsweise auch um Faser- oder MDF-Platten handeln. Diese können durch Formverpressen in die Form eines Bogensegments gebracht und anschließend durch Fräsen mit der gewünschten Außenkontur sowie einer Nut 12' zur Aufnahme eines Lenkkranzes 2 versehen werden.

Ferner umfasst das Halbfertigteil 10 eine Furnierschicht 18, bei der es sich bevorzugt um eine Edelfurnierschicht handelt, obgleich die vorliegende Erfindung nicht auf eine bestimmte Holzart beschränkt ist. Dabei ist es erfindungsgemäß vorgesehen, dass die Furnierschicht 18 eine vergleichsweise geringe Dicke im Bereich von beispielsweise 0,5 bis 2,0 mm besitzt. Ferner ist es selbstverständlich möglich, dass die Furnierschicht mehrere Lagen Edelfurnier aufweist.

Die Furnierschicht 18 ist mit dem Träger 12 mittels einer Verbindungsschicht verbunden, die eine Heizeinrichtung 14 und eine Klebstoffschicht 16 aufweist. Die Heizeinrichtung 14 und die Klebstoffschicht 16 können grundsätzlich eine beliebige Positionierung zwischen dem Träger 12 und der Furnierschicht 18 besitzen, wobei zumindest eine der beiden Schichten an die mindestens eine Furnierschicht 18 angrenzt. Ebenso können die Heizeinrichtung 14 und die Klebstoffschicht 16 einander durchdringen, wie unten stehend noch ausführlicher erläutert werden wird.

Die Klebstoffschicht 16 weist bevorzugt einen duroplastischen Klebstoff auf, der insbesondere auf Harnstoff und/oder Melaminharz basiert. Diese Klebstoffe sind kostengünstig verfügbar, leicht zu verarbeiten und stellen eine sichere Verbindung der Furnierschicht 18 mit dem Träger 12 bereit. Hinsichtlich einer gezielt steuerbaren und einfachen Herstellung des erfindungsgemäßen Halbfertigteils ist es ferner bevorzugt, dass die Klebstoffschicht 16 einen wärmeaktivierbaren Klebstoff aufweist.

Darüber hinaus ist erfindungsgemäß vorgesehen, dass die Klebstoffschicht 16 wärmeleitfähige Partikel enthält, die bevorzugt aus einem metallischen Material wie Aluminium oder dergleichen bestehen. Auf diese Weise kann die Wärmeleitfähigkeit der Klebstoffschicht noch homogener ausgestaltet werden.

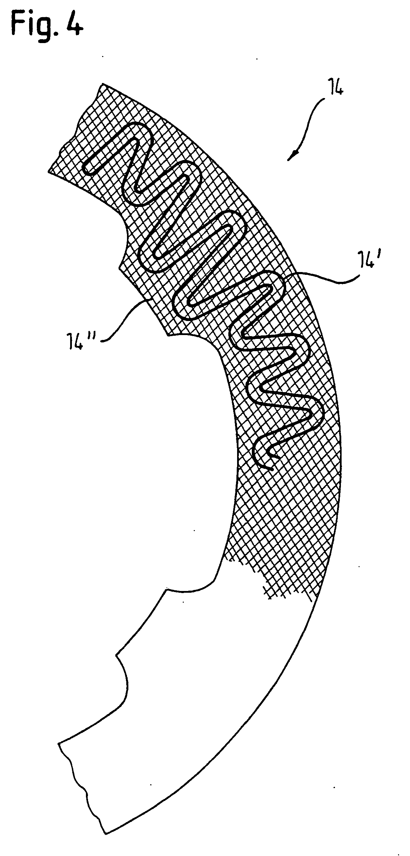

Die Heizeinrichtung 14 der vorliegenden Ausführungsform ist schematisch in Fig. 4 dargestellt und ist durch ein Gewebe bzw. Geflecht gebildet, in welchem mäanderförmig leitfähige Fasern 14' als Heizelemente vorgesehen sind. Der Verlauf und die Anordnung der leitfähigen Fasern 14' kann prinzipiell beliebig an die gewünschte Erwärmung des Halbfertigteils angepasst werden. Ferner kann die Form der Heizeinrichtung 14 bzw. des entsprechenden Gewebes ebenfalls an Besonderheiten des Halbfertigteils bzw. der später herzustellenden Lenkvorrichtung angepresst werden, beispielsweise indem wie in Fig. 4 gezeigt Erweiterungen 14" für den Übergang zu Lenkradspeichen vorgesehen werden.

Durch den gewebeartigen Aufbau besitzt die Heizeinrichtung 14 eine hohe Durchlässigkeit für Klebstoff, und zwar insbesondere senkrecht zu der Zeichenebene in Fig. 4. Hierdurch ist es möglich, dass die Klebstoffschicht und die Heizeinrichtung 14 bei der Herstellung des erfindungsgemäßen Halbfertigteils einen innigen Verbund eingehen, sodass die Heizeinrichtung 14 weitgehend in die Klebstoffschicht eingebettet wird. Hierdurch ergibt sich ein besonders vorteilhaftes Erwärmungsverhalten des erfindungsgemäßen Halbfertigteils.

Als Heizeinrichtung kommen eine Vielzahl von Konstruktionen und Materialien in Betracht, wobei sich insbesondere Textilgewebe und perforierte Kunststofffolien als Trägermaterial bewährt haben, während die eigentliche Erwärmung beispielsweise durch eingewobene Heizdrähte, Kohlefasern oder dergleichen erzielt werden kann.

Eine schematische Schnittansicht einer bevorzugten Ausführungsform der erfindungsgemäßen beheizbaren Lenkvorrichtung 1 ist in Fig. 1 gezeigt. Die in Fig. 1 gezeigte Lenkvorrichtung 1 umfasst zwei Halbfertigteile 10, die gemeinsam auf einen Lenkkranz 2 aufgebracht und miteinander verbunden, beispielsweise verklebt sind. Ferner kann die in Fig. 1 gezeigte Lenkvorrichtung als Ganzes zusätzlich mit einer Lackschicht umhüllt werden, um eine vollständig glatte Oberfläche zu erzielen und Fugen zwischen benachbarten Halbfertigteilen zu schließen.

Ferner ist zu beachten, dass die beheizbare Lenkvorrichtung 1 der vorliegenden Erfindung nicht auf die in Fig. 1 gezeigte Ausführungsform beschränkt ist, die durch zwei Halbfertigteile 10 gebildet ist. Vielmehr ist es im Rahmen der vorliegenden Erfindung ebenso möglich, die Lenkvorrichtung 1 auch ohne den Einsatz von Fertigteilen herzustellen, indem beispielsweise zunächst der Träger 12 auf den Lenkkranz 2 aufgebracht wird, um anschließend die übrigen Schichten aufzubringen und Form zu verpressen.

Eine bevorzugte Ausführungsform des erfindungsgemäßen Verfahrens zur Herstellung des in Fig. 2 schematisch gezeigten Hartfertigteils 10 wird nachfolgend unter Bezugnahme auf Fig. 3 erläutert, die eine schematische, explosionsartige Schnittansicht der in Fig. 2 gezeigten Ausführungsform zeigt.

Bei dem erfindungsgemäßen Verfahren wird zunächst ein bogen- bzw. bogensegmentförmiger Träger 12 aus Holz oder einem Holzwerkstoff mit den Eingangs beschriebenen Eigenschaften bereitgestellt. Der Träger 12 besitzt eine Ausnehmung bzw. Nut 12', die es ermöglicht, den Träger 12 auf einen Lenkkranz 2 aufzubringen. Gleichzeitig wird eine separate Furnierschicht 18 bereitgestellt, deren Form sich bereits der zukünftigen Außenkontur des Halbfertigteils 10 annähern kann, jedoch noch nicht in der endgültigen Form vorliegen muss.

Anschließend wird eine Klebstoffschicht 14 mit den oben beschriebenen Eigenschaften auf eine Seitenfläche des Trägers 12, die mit der Furnierschicht 18 versehen werden soll, und/oder eine Seitenfläche der Furnierschicht 18, die dem Träger 12 zugewandt sein soll, aufgebracht. Danach kann die Heizeinrichtung 16 auf die Klebstoffschicht 14 aufgelegt und hierdurch provisorisch fixiert werden, um anschließend die vorbereiteten Teile miteinander in Kontakt zu bringen und ein Formverpressen des Trägers 12 und der (mindestens einen) Furnierschicht 18 durchzuführen. Beim Formverpressen werden die jeweiligen Seitenflächen des Trägers 12 und der Furnierschicht 18 über die Klebstoffschicht 16 miteinander verbunden, wobei die Klebstoffschicht 16 und/oder die Heizeinrichtung 14 unmittelbar an die mindestens eine Furnierschicht angrenzt. Es ist selbstverständlich, dass die Auswahl der Flächen des Trägers 12 bzw. der Furnierschicht 18, welche mit Klebstoff beaufschlagt werden, vom Fachmann in geeigneter Weise angepasst werden können. Ebenso ist es denkbar, die Klebstoffschicht 16 und die Heizeinrichtung 14 bereits von vornherein zu einer Verbindungsschicht zu integrieren und diese gleichzeitig auf eine oder beide Flächen des Trägers 12 und der Furnierschicht 18 aufzubringen.

Das Formverpressen erfolgt bevorzugt unter Wärmezufuhr, um hierdurch eine gute Formbarkeit der Bauteile zu erzielen und einen gegebenenfalls wärmeaktivierbaren Kleber zu aktivieren. Hinsichtlich der Aktivierung des Klebstoffes ist es ebenfalls möglich, das Formverpressen im hochfrequenten Wechselfeld durchzuführen, was eine sehr gleichmäßige Feuchtigkeitsverteilung in dem späteren Halbfertigteil ergibt.

Beim Formverpressen wird die mindestens eine Furnierschicht 18 an den Träger 12 angelegt und dabei in eine neue, dauerhafte Form gebracht. Hinsichtlich des beim Formverpressen aufzubringenden Drucks haben sich Drücke von mindestens 0,07 MPa bewährt, wobei je nach Zähigkeit des Klebstoffs, Formbarkeit der Furnierschicht 18, etc. auch deutlich höhere Drücke zum Einsatz kommen können.

## Patentansprüche

1. Beheizbare Lenkvorrichtung (1), insbesondere für Kraftfahrzeuge, mit:
einem bogen- oder bogensegmentförmigen Träger (12), der auf einen Lenkkranz (2) aufgebracht ist;
mindestens einer Furnierschicht (18), insbesondere Edelfurnierschicht, die fest mit dem Träger (12) verbunden ist;
wobei zwischen dem Träger (12) und der mindestens einen Furnierschicht (18) eine Verbindungsschicht vorgesehen ist, **dadurch gekennzeichnet, dass**
der Träger aus Holz oder einem Holzwerkstoff ist und die Verbindungsschicht eine Heizeinrichtung (14) und eine Klebstoffschicht (16) aufweist, wobei die Heizeinrichtung (14) und/oder die Klebstoffschicht (16) unmittelbar an die mindestens eine Furnierschicht (18) angrenzt.

2. Halbfertigteil (10) für eine beheizbare Lenkvorrichtung (1), insbesondere für Kraftfahrzeuge, mit:
einem bogen- oder bogensegmentförmigen Träger (12), der auf einen Lenkkranz (2) aufbringbar ist;
mindestens einer Furnierschicht (18), insbesondere Edelfurnierschicht, die fest mit dem Träger (12) verbunden ist;
wobei zwischen dem Träger (12) und der mindestens einen Furnierschicht (18) eine Verbindungsschicht vorgesehen ist **dadurch gekennzeichnet, dass**
der Träger aus Holz oder einem Holzwerkstoff ist und die Verbindungsschicht eine Heizeinrichtung (14) und eine Klebstoffschicht (16) aufweist, wobei die Heizeinrichtung (14) und/oder die Klebstoffschicht (16) unmittelbar an die mindestens eine Furnierschicht (18) angrenzt.

3. Lenkvorrichtung oder Halbfertigteil nach Anspruch 1 oder 2, **dadurch gekennzeichnet, dass** die mindestens eine Furnierschicht (18) mit dem Träger (12) durch Formverpressen verbunden ist.

4. Lenkvorrichtung oder Halbfertigteil nach einem der vorhergehenden Ansprüche, **dadurch gekennzeichnet, dass** die Dicke der mindestens einen Furnierschicht (18) insgesamt höchstens 2,0 mm, bevorzugt höchstens 1,2 mm beträgt.

5. Lenkvorrichtung oder Halbfertigteil nach einem der vorhergehenden Ansprüche, **dadurch gekennzeichnet, dass** die Klebstoffschicht (16) einen duroplastischen und/oder wärmeaktivierbaren Klebstoff, insbesondere auf Harnstoff- und/oder Melaminharzbasis, aufweist.

6. Lenkvorrichtung oder Halbfertigteil nach einem der vorhergehenden Ansprüche, **dadurch gekennzeichnet, dass** die Klebstoffschicht (16) wärmeleitfähige Partikel aufweist, die bevorzugt aus einem metallischen Material, insbesondere aus Aluminium bestehen.

7. Lenkvorrichtung oder Halbfertigteil nach einem der vorhergehenden Ansprüche, **dadurch gekennzeichnet, dass** die Heizeinrichtung (14) durch ein Gewebe oder Geflecht gebildet ist, das zumindest teilweise elektrisch leitfähige Fasern (14'), Drähte oder dergleichen aufweist.

8. Lenkvorrichtung oder Halbfertigteil nach einem der vorhergehenden Ansprüche, **dadurch gekennzeichnet, dass** die Heizeinrichtung (14) zumindest abschnittsweise durchlässig für Klebstoff ist, insbesondere senkrecht zu einer flächigen Erstreckungsrichtung der Heizeinrichtung.

9. Lenkvorrichtung oder Halbfertigteil nach einem der vorhergehenden Ansprüche, **dadurch gekennzeichnet, dass** die Heizeinrichtung (14) zumindest teilweise in die Klebestoffschicht (16) eingebettet ist.

10. Beheizbare Lenkvorrichtung, insbesondere für Kraftfahrzeuge, mit mindestens zwei Halbfertigteilen (10) nach einem der Ansprüche 2 bis 9, die auf einen gemeinsamen Lenkkranz (2) aufgebracht und miteinander verbunden sind.

11. Verfahren zum Herstellen eines Halbfertigteils (10) für eine beheizbare Lenkvorrichtung (1), insbesondere für Kraftfahrzeuge, mit den Schritten:
Bereitstellen eines bogen- oder bogensegmentförmigen Trägers (12) aus Holz oder einem Holzwerkstoff, der auf einen Lenkkranz (2) aufbringbar ist, und mindestens einer Furnierschicht (18), insbesondere Edelfurnierschicht;
Aufbringen einer Klebstoffschicht (14) und einer Heizeinrichtung (16) auf eine erste Seitenfläche des Trägers (12) und/oder eine erste Seitenfläche der mindestens einen Furnierschicht (18);
Formverpressen des Trägers (12) und der mindestens einen Furnierschicht(18) derart, dass die jeweiligen ersten Seitenflächen über die mindestens eine Klebstoffschicht (16) miteinander verbunden werden, wobei die Klebstoffschicht (16) und/oder die Heizeinrichtung (14) unmittelbar an die mindestens eine Furnierschicht (18) angrenzt.

12. Verfahren nach Anspruch 11, **dadurch gekennzeichnet, dass** die Klebstoffschicht (16) auf die erste Seitenfläche des Trägers (12) oder der mindestens einen Furnierschicht (18) aufgebracht und anschließend die Heizeinrichtung (14) auf die Klebstoffschicht (16) aufgelegt wird.

13. Verfahren nach Anspruch 11 oder 12, **dadurch gekennzeichnet, dass** das Formverpressen unter Wärmezufuhr und/oder im hochfrequenten Wechselfeld erfolgt.

14. Verfahren nach einem der Ansprüche 11 bis 13, **dadurch gekennzeichnet, dass** die mindestens eine Furnierschicht (18) beim Formverpressen in eine neue, dauerhafte Form gebracht wird.

15. Verfahren nach einem der Ansprüche 11 bis 14, **dadurch gekennzeichnet, dass** die mindestens eine Furnierschicht (18) beim Formverpressen zumindest abschnittsweise mit einem Druck von mindestens 0,07 MPa beaufschlagt wird.

## Claims

1. Heatable steering device (1), in particular for motor vehicles, with:
an arch-shaped or arch-segment-shaped carrier (12) fitted on to a steering rim (2),
at least one verneer layer (18), in particular face veneer layer, firmly connected to the carrier (12),
wherein provided between the carrier (12) and the at least one veneer layer (18) is a connecting layer, **characterised in that**
the carrier is made of wood or a wood material and the connecting layer has a heating device (14) and an adhesive layer (16), wherein the heating device (14) and/or the adhesive layer (16) immediately borders on the at least one veneer layer (18).

2. Semi-finished part (10) for a heatable steering device (1), in particular for motor vehicles, with
an arch-shaped or arch-segment-shaped carrier (12) which can be fitted to a steering rim,
at least one verneer layer (18), in particular face veneer layer firmly connected to the carrier (12),
wherein provided between the carrier (12) and the at least one veneer layer (18) is a connecting layer, **characterised in that**
the carrier is made of wood or a wood material and the connecting layer has a heating device (14) and an adhesive layer (16), wherein the heating device (14) and/or the adhesive layer (16) immediately borders on the at least one veneer layer (18)

3. Steering device or semi-finished part according to claim 1 or 2, **characterised in that** the at least one veneer layer (18) is connected to the carrier (12) by compression moulding.

4. Steering device or semi-finished part according to one of the preceding claims, **characterised in that** the thickness of the at least one veneer layer (18) amounts in total to at the most 2.0 mm, preferably at the most 1.2 mm.

5. Steering device or semi-finished part according to one of the preceding claims, **characterised in that** the adhesive layer (16) is a thermosetting and/or heat-activatable adhesive, in particular based on urea and/or melamine resin.

6. Steering device or semi-finished part according to one of the preceding claims, **characterised in that** the adhesive layer (16) has heat-conducting particles which preferably consist of a metallic material, in particular of aluminium.

7. Steering device or semi-finished part according to one of the preceding claims, **characterised in that** the heating device (14) is formed by a woven cloth or braiding which has at least partially electrically conducting fibres (14'), wires or such.

8. Steering device or semi-finished part according to one of the preceding claims, **characterised in that** the heating device (14) is at least in sections permeable to adhesive, in particular perpendicular to a flat extension direction of the heating device.

9. Steering device or semi-finished part according to one of the preceding claims, **characterised in that** the heating device (14) is at least partially embedded into the adhesive layer (16).

10. Heatable steering device, in particular for motor vehicles, with at least two semi-finished parts (10) according to one of claims 2 to 9, which are fitted on to a common steering rim (2) and connected to one another.

11. Method for producing a semi-finished part (10) for a heatable steering device (1), in particular for motor vehicles, with the steps:
providing an arch-shaped or arch-segment-shaped carrier (12) made of wood or a wood material, which can be fitted on to a steering rim (2), and at least one veneer layer (18), in particular face veneer layer,
applying an adhesive layer (14) and a heating device (16) to a first side face of the carrier (12) and/or a first side face of the at least one veneer layer (18),
compression moulding the carrier (12) and the at least one veneer layer (18) in such a way that the respective first side faces are connected to one another via the at least one adhesive layer (16), wherein the adhesive layer (16) and/or the heating device (14) immediately borders on the at least one veneer layer (18).

12. Method according to claim 11, **characterised in that** the adhesive layer (16) is applied to the first side face of the carrier (12) or of the at least one veneer layer (18) and then the heating device (14) is placed on the adhesive layer (16).

13. Method according to claim 11 or 12, **characterised in that** the compression moulding is done with heat supply and/or in the high-frequency alternating field.

14. Method according to one of claims 11 to 13, **characterised in that** the at least one veneer layer (18) is put into a new, permanent form during compression moulding.

15. Method according to one of claims 11 to 14, **characterised in that** the at least one veneer layer (18) is charged at least in sections with a pressure of at least 0.07 MPa during compression moulding.

## Revendications

1. Dispositif de direction (1) pouvant être chauffé, en particulier pour des véhicules automobiles, comprenant :
un support (12) en forme d'arc ou segment d'arc qui est appliqué sur une couronne de direction (2) ;
au moins une couche de contreplacage (18), en particulier une couche de contreplacage de bois précieux, qui est reliée de façon fixe au support (12) ;
une couche de liaison étant prévue entre le support (12) et la au moins une couche de contreplacage (1B), **caractérisé en ce que** le support est à base de bois ou d'un matériau de bois et la couche de liaison présente un dispositif de chauffage (14) et une couche de colle (16), le dispositif de chauffage (14) et/ou la couche de colle (16) étant directement contigus à la au moins une couche de contreplacage (18).

2. Produit semi-fini (10) pour un dispositif de direction (1) pouvant être chauffé, en particulier pour des véhicules automobiles, comprenant :
un support (12) en forme d'arc ou de segment d'arc, qui peut être appliqué sur une couronne de direction ;
au moins une couche de contreplacage (18), en particulier une couche de contreplacage de bois précieux, qui est reliée de façon fixe au support (12) ;
une couche de liaison étant prévue entre le support (12) et la au moins une couche de contreplacage (18), **caractérisé en ce que** le support est à base de bois ou d'un matériau de bois et la couche de liaison présente un dispositif de chauffage (14) et une couche de colle (16), le dispositif de chauffage (14) et/ou la couche de colle (16) étant directement contigus à la au moins une couche de contreplacage (18).

3. Dispositif de direction ou produit semi-fini selon la revendication 1 ou 2, **caractérisé en ce que** la au moins une couche de contreplacage (18) est reliée au support (12) par compression de moulage.

4. Dispositif de direction ou produit semi-fini selon l'une quelconque des revendications précédentes, **caractérisé en ce que** l'épaisseur de la au moins une couche de contreplacage (18) est au total au maximum de 2,0 mm, de préférence au maximum de 1,2 mm.

5. Dispositif de direction ou produit semi-fini selon l'une quelconque des revendications précédentes, **caractérisé en ce que** la couche de colle (16) présente une colle duroplastique et/ou une colle pouvant être activée à la chaleur, en particulier à base d'urée et/ou de résine de mélamine.

6. Dispositif de direction ou produit semi-fini selon l'une quelconque des revendications précédentes, **caractérisé en ce que** la couche de colle (16) présente des particules thermoconductibles, qui sont de préférence à base d'un matériau métallique, en particulier de l'aluminium.

7. Dispositif de direction ou produit semi-fini selon l'une quelconque des revendications précédentes, **caractérisé en ce que** le dispositif de chauffage (14) est formé par un tissu ou un treillis qui présente des fibres (14') au moins en partie électroconductrices, des fibres ou similaires.

8. Dispositif de direction ou produit semi-fini selon l'une quelconque des revendications précédentes, **caractérisé en ce que** le dispositif de chauffage (14) est perméable pour la colle au moins par endroits, en particulier perpendiculairement à un sens d'étirement à plat du dispositif de chauffage.

9. Dispositif de direction ou produit semi-fini selon l'une quelconque des revendications précédentes, **caractérisé en ce que** le dispositif de chauffage (14) est enfoncé au moins partiellement dans la couche de colle (16).

10. Dispositif de direction pouvant être chauffé, en particulier pour des véhicules automobiles, avec au moins deux produits semi-finis (10) selon l'une quelconque des revendications 2 à 9, qui sont appliquées sur une couronne de direction (2) commune et sont reliées entre elles.

11. Procédé pour fabriquer un produit semi-fini (10) pour un dispositif de direction (1) pouvant être chauffé, en particulier pour des véhicules automobiles, comprenant les étapes suivantes :
fabrication d'un support (12) en forme d'arc ou de segment d'arc à base de bois ou d'un matériau de bois, qui peut être appliqué sur une couronne de direction (2), et au moins d'une couche de contreplacage (18), en particulier une couche de contreplacage de bois précieux ;
application d'une couche de colle (16) et d'un dispositif de chauffage (14) sur une première face latérale du support (12) et/ou une première face latérale de la au moins une couche de contreplacage (1B) ;
compression par moulage du support (12) et de la au moins une couche de contreplacage (18), de telle sorte que les premières faces latérales respectives sont reliées entre elles au moyen de la au moins une couche de colle (16), la couche de colle (16) et/ou le dispositif de chauffage (14) étant directement contigus à la au moins une couche de contreplacage (18).

12. Procédé selon la revendication 11, **caractérisé en ce que** la couche de colle (16) est appliquée sur la première face latérale du support (12) ou de la au moins une couche de contreplacage (18) et le dispositif de chauffage (14) est posé ensuite sur la couche de colle (16).

13. Procédé selon la revendication 11 ou 12, **caractérisé en ce que** la compression par moulage s'effectue avec l'apport de chaleur et/ou dans la zone alternative à haute fréquence.

14. Procédé selon l'une quelconque des revendications 11 à 13, **caractérisé en ce que** la au moins une couche de contreplacage (18) est amenée lors de la compression par moulage dans une nouvelle forme durable.

15. Procédé selon l'une quelconque des revendications 11 à 14, **caractérisé en ce que** la au moins une couche de contreplacage (18) est alimentée lors de la compression par moulage au moins par endroits avec une pression d'au moins 0,07 MPa.
